# DEMANDE DE BREVET EUROPEEN

(11) **EP 1 570 898 A1**
(43) Date de publication de la demande: **07.09.2005**
(21) Numéro de dépôt: 05009454.9
(22) Date de dépôt: 18.11.1999
(51) Int. Cl.: B01D 63/06, B01D 69/10

(54) **Support monolithe poreux d'un élément de filtration et élément de filtration**

(30) Priorité: 18.11.1998 FR 9814493
(62) Demande divisionnaire de: 99956078.2
(71) Demandeur: Orelis, 01700 St Maurice de Beynost (FR)
(72) Inventeur: Liou, Jun Kong, 01700 Beynost (FR); Thoraval, Valérie, 69480 Morance (FR); Joulin, Jean-Pierre, 34790 Grabels (FR)
(74) Mandataire: Cabinet Hirsch

(57) **Abrégé**

Le support comporte un premier ensemble de canaux (8'a) ayant des sections analogues, dans la partie centrale du support (6'), séparés les uns des autres par des parois de direction sensiblement radiale présentant une zone commune suivant l'axe (7') du support (6') et au moins un second ensemble de canaux (8'b, 8'c) ayant une disposition périphérique autour du premier ensemble de canaux (8'a). De préférence, les canaux du premier et du second ensembles (8'a, 8'b, 8'c) ont des sections identiques. Les sections des canaux peuvent présenter la forme de secteurs circulaires à 120° groupés trois par trois sous la forme de structures trilobées.

## Description

L'invention concerne un support monolithe poreux d'un élément de filtration utilisé pour la mise en oeuvre sur un milieu liquide, d'un procédé de filtration, de microfiltration, d'ultrafiltration, de nanofiltration ou d'osmose inverse, dans lequel le milieu fluide circule sous la forme de courants tangentiels, au contact de membranes de filtration.

Dans de tels procédés de filtration, les membranes assurent une séparation sur le milieu liquide en circulation à leur contact, du fait qu'elles laissent passer certaines molécules ou particules et sont traversées par d'autres fractions du milieu fluide, lorsqu'elles sont soumises à une pression établie de part et d'autre des membranes, appelée pression transmembranaire. La partie du milieu fluide traversant la membrane est appelée perméat et la partie du milieu fluide arrêtée par la membrane est appelée rétentat. De manière générale, la vitesse de passage du perméat à travers la membrane est d'autant plus grande que la membrane présente une épaisseur plus faible. Cependant, une membrane de très faible épaisseur présente une très grande fragilité, de sorte que les membranes de filtration sont généralement réalisées sous la forme de couches de recouvrement de surfaces d'un support monolithe poreux. Le support monolithe poreux assure la résistance mécanique de l'élément de filtration, de sorte qu'on peut utiliser des membranes de très faible épaisseur.

Il est connu d'utiliser des éléments de filtration dont les supports monolithes poreux ont une forme tubulaire et une section transversale sensiblement constante suivant la direction de leur axe. Les éléments de filtration peuvent être constitués par exemple par des tubes à section circulaire dont les surfaces sont revêtues par des membranes de filtration et qui sont montés à l'intérieur d'une enveloppe pour constituer un module de filtration comportant une pluralité d'éléments de filtration tubulaires.

De manière à obtenir une grande surface d'échange des membranes par unité de volume de l'élément de filtration et un très bon facteur de perméabilité, on a proposé d'utiliser des supports monolithes de forme tubulaire ayant une pluralité de canaux de direction axiale qui sont séparés les uns des autres par des cloisons constituées du matériau poreux du monolithe, par exemple une céramique, et dont les surfaces sont recouvertes par des membranes de filtration.

On a par exemple proposé un support monolithe poreux pour un élément de filtration constitué sous la forme d'un cylindre en céramique à section circulaire dans lequel sont ménagés des canaux rectilignes cylindriques dont les sections circulaires sont réparties dans toute la section du support monolithe poreux. L'un des canaux est disposé suivant l'axe du support monolithe, de sorte que sa section occupe la partie centrale de la section du monolithe et les autres canaux sont disposés suivant plusieurs rangées dans lesquelles les axes des canaux sont disposés sur des surfaces cylindriques coaxiales à l'élément monolithe cylindrique. Les sections des canaux constituant les rangées successives sont elles-mêmes centrées sur des cercles concentriques à la section transversale du support monolithe.

Dans un tel élément de filtration multicanal, le perméat, qui traverse les membranes de filtration, circule à l'intérieur des parois poreuses du support monolithe pour se diriger vers la surface extérieure du support. Les conditions de circulation du perméat sont donc très différentes, suivant la position dans la section de l'élément de filtration, du canal duquel provient le perméat. En outre, les parois ménagées entre les canaux circulaires ne sont pas d'épaisseur constante. De manière générale, les canaux situés dans des zones différentes du support monolithe ne fonctionnent pas de la même façon et on constate que certains canaux sont sujets à un colmatage préférentiel. En outre, de tels éléments de filtration ne sont pas adaptés dans le cas de fluides visqueux pouvant contenir des matières solides. On a donc proposé de réaliser un support monolithe poreux pour des membranes de filtration comportant des canaux ayant des sections sensiblement analogues séparées par des cloisons radiales ayant une zone commune située suivant l'axe du support monolithe. Les cloisons de séparation des canaux et la cloison du support délimitant les canaux vers l'extérieur ont des épaisseurs sensiblement identiques. De plus, les sections des canaux présentent la forme générale de polygones à angles arrondis.

En particulier, on a proposé un support pour un élément de filtration comportant trois canaux dont les sections ont la forme de secteurs circulaires à angles arrondis qui sont séparés par des parois radiales présentant une partie rectiligne. Une telle section est généralement désignée comme section trilobée. Plus généralement, on peut envisager l'utilisation d'éléments de filtration comportant un nombre quelconque de canaux, par exemple supérieur à 3, séparés par des parois radiales. La section de tels éléments de filtration ou de leurs supports monolithes sera désignée comme section multilobée.

Une telle section pour un élément de filtration est particulièrement bien adaptée à la filtration tangentielle de fluides visqueux et/ou contenant des matières solides telles que des fibres.

Cette section présente également l'avantage de ne comporter qu'un ensemble de canaux identiques, si bien qu'on évite des effets de colmatage préférentiels dans certaines zones de l'élément de filtration.

Toutefois, une telle section trilobée ou multilobée ou toute autre section comportant un seul ensemble de canaux identiques séparés par des parois radiales ne permet pas toujours d'atteindre de très bonnes performances, en ce qui concerne le rendement de la filtration et la consommation énergétique, dans certaines opérations de filtration, de microfiltration, de nanofiltration, d'ultrafiltration ou d'osmose inverse.

En effet, les performances d'un élément de filtration dépendent dans une large part de la surface filtrante de l'élément, c'est-à-dire de la surface totale exposée au fluide des membranes de filtration ou plus exactement du rapport de la surface filtrante à la section d'écoulement du milieu liquide dans l'élément de filtration. De manière à accroître les performances de l'élément de filtration et à diminuer la consommation énergétique nécessaire pour mettre le fluide en circulation et récupérer le perméat, il est avantageux d'utiliser des éléments de filtration dont le rapport R = Sf/Se soit le plus grand possible, avec Sf = surface filtrante et Se = section d'écoulement ou de passage de fluide.

On a également proposé d'accroître la surface filtrante des éléments de filtration en réalisant des éléments de filtration multicanaux comportant un canal central suivant l'axe de l'élément de filtration ayant une section circulaire et un ou plusieurs ensembles de canaux à section non circulaire dont les axes sont disposés sur des cylindres coaxiaux à l'élément de filtration. Ces canaux non circulaires présentent généralement des sections transversales de forme trapézoïdales ou triangulaires à angles arrondis et ces sections constituent une ou plusieurs rangées circulaires autour du canal central. Les sections transversales des canaux sont différentes d'une rangée à la suivante et ont généralement une section décroissante de l'extérieur vers l'intérieur de l'élément de filtration. De tels éléments de filtration multicanaux peuvent présenter une surface filtrante accrue par rapport aux éléments de filtration à section trilobée ou multilobée et par rapport aux éléments de filtration multicanaux comportant des canaux identiques à section circulaire répartis suivant des rangées circulaires de la section de l'élément de filtration.

Cependant, la section d'écoulement est accrue dans des proportions semblables, de sorte que le rapport Sf/Se n'est pas sensiblement amélioré.

Il en résulte que les performances des éléments de filtration ne sont pas sensiblement améliorées par rapport aux éléments de filtration à section trilobée ou comportant des canaux à section circulaire.

Les supports d'éléments de filtration multicanaux comportant un canal central suivant l'axe du support et des rangées de canaux réparties autour du canal central présentent d'autre part une résistance mécanique qui peut être insuffisante, lorsqu'on augmente le nombre et la section transversale des canaux, pour accroître la surface filtrante.

Le but de l'invention est donc de proposer un support monolithe poreux d'un élément de filtration ayant une forme tubulaire et une section transversale sensiblement constante suivant la direction de son axe et comportant une pluralité de canaux séparés les uns des autres par des parois du support poreux, dont les surfaces sont destinées à être revêtues par des membranes de filtration, ces canaux ayant des sections transversales réparties dans la section transversale du support, de telle sorte qu'on obtienne de très bonnes performances de filtration et une faible consommation énergétique, lors de l'utilisation de l'élément de filtration, le support monolithe présentant en outre une bonne résistance mécanique.

Dans ce but, le support monolithe poreux suivant l'invention comporte un premier ensemble d'au moins deux canaux ayant des sections analogues, dans la partie centrale du support, séparés l'un de l'autre par au moins une paroi de direction sensiblement radiale s'étendant suivant l'axe du support tubulaire et au moins un second ensemble de canaux ayant une disposition périphérique autour du premier ensemble de canaux.

De manière générale, le premier ensemble de canaux comporte une pluralité de canaux identiques séparés les uns des autres par des parois radiales ayant en commun une partie de cloison s'étendant suivant l'axe du support monolithe. Une telle structure est appelée structure multilobée.

Dans un mode de réalisation préférentiel, le premier ensemble de canaux comporte trois canaux et présente une structure trilobée.

Egalement dans une disposition préférentielle, les canaux du premier et du second ensembles présentent des sections analogues ou identiques.

L'invention est également relative à un élément de filtration ayant un support monolithe poreux dont les parois des canaux sont revêtues par des couches de filtration ou membranes, le support monolithe poreux étant réalisé suivant l'invention.

Afin de bien faire comprendre l'invention, on va maintenant décrire, à titre d'exemple non limitatif, plusieurs modes de réalisation d'un support monolithe poreux suivant l'invention et les caractéristiques de ces supports monolithes suivant l'invention comparées aux caractéristiques de supports monolithes suivant l'art antérieur.

La figure 1 est une vue en coupe transversale d'un support monolithe suivant l'invention et suivant un premier mode de réalisation.

La figure 2 est une vue en coupe transversale d'un support monolithe poreux suivant l'invention et suivant un second mode de réalisation.

La figure 3 est une vue en coupe transversale d'un support monolithe poreux suivant une première variante du second mode de réalisation.

La figure 4 est une vue en coupe transversale d'un support monolithe poreux suivant une seconde variante du second mode de réalisation.

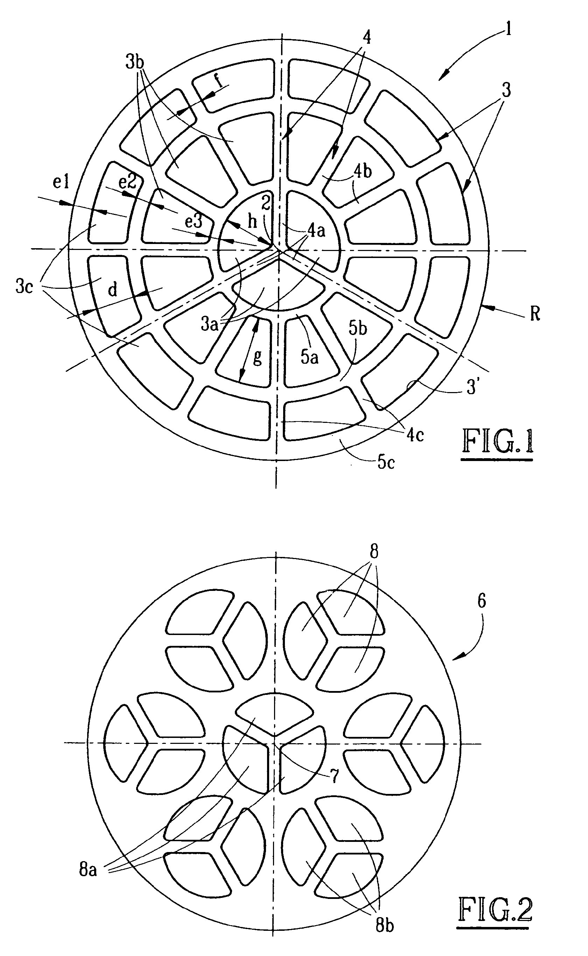

Sur la figure 1, on voit un support monolithe poreux d'un élément de filtration désigné de manière générale par le repère 1.

Le support de l'élément de filtration présente une forme tubulaire cylindrique et un axe de symétrie central rectiligne 2.

La section transversale du support 1 est constante dans la direction de l'axe 2, toutes les sections transversales du support, quelle que soit leur position suivant l'axe 2 ayant la forme représentée sur la figure 1.

Le support 1 est traversé, suivant toute sa longueur dans la direction axiale 2, par des canaux qui seront désignés de manière générale par le repère 3.

Les canaux sont séparés les uns des autres par des parois qui seront désignées de manière générale par le repère 4 et qui constituent dans leur ensemble, le corps en matière poreuse du support monolithe.

Le support monolithe, qui est de préférence réalisé en matériau céramique, peut être obtenu par un procédé classique d'extrusion d'une matière céramique à travers une filière de forme adaptée réalisant le formage du réseau de parois 4 de séparation des canaux 3.

Après cuisson de la matière céramique, la surface intérieure des canaux 3 est recouverte d'une couche mince d'une substance permettant d'obtenir par frittage une couche ou membrane de filtration 3' sur la surface des canaux 3.

Pour la mise en oeuvre d'une opération de filtration dans un élément de filtration constitué par le support monolithe dont les surfaces des canaux 3 ont été recouvertes de membranes de filtration, on fait circuler le milieu liquide à filtrer, dans la direction axiale à l'intérieur des canaux 3. On établit une différence de pression entre la partie interne de l'élément de filtration constitué par l'ensemble des canaux et le milieu extérieur à l'élément de filtration. Une fraction du milieu liquide à filtrer traverse les membranes de filtration des canaux pour imprégner la matière poreuse des parois 4. Cette fraction du milieu à filtrer ou perméat circule à l'intérieur des parois en direction de la surface externe poreuse du support monolithe 1 de l'élément de filtration.

Le support monolithe 1 comporte un premier ensemble de canaux 3a disposé à la partie centrale du support autour de l'axe 2. Ce premier ensemble de canaux comporte trois canaux 3a ayant la forme de secteurs circulaires à angles arrondis séparés les uns des autres par des parois 4a de direction radiale ayant en commun une zone centrale suivant l'axe 2 du support monolithe.

Les plans de symétrie des parois 4a, qui ont en commun l'axe 2, font entre eux des angles dièdres de 120°. La trace de ces plans a été représentée en traits interrompus sur la figure 1.

Les canaux 3a sont délimités vers l'extérieur du support monolithe par une paroi tubulaire à section circulaire 5a ayant des parties communes avec les parties d'extrémité externes des parois 4a.

Le premier ensemble de canaux 3a constitue une section trilobée analogue à la section de support d'éléments de filtration selon l'art antérieur.

Le support monolithe 1 comporte un second ensemble de canaux 3b disposés à la périphérie de l'ensemble de canaux 3a et présentant des sections transversales en forme de secteurs annulaires trapézoïdaux à angles arrondis, qui sont toutes identiques. Les sections des canaux 3b constituent une couronne circulaire entourant l'ensemble des sections des canaux 3a.

Dans chacun des secteurs de cylindre délimités par le prolongement des parois radiales 4a à 120°, sont disposés quatre canaux 3b, de sorte que le support 1 comporte douze canaux 3b, dans des dispositions autour de l'axe 2 se déduisant l'une de l'autre par une rotation de 30° autour de l'axe 2 du support.

Les canaux 3b sont séparés les uns des autres par des parois radiales 4b et sont délimités vers l'extérieur par une paroi tubulaire circulaire 5b. Trois parois 4b constituent le prolongement des parois radiales 4a.

Le support monolithe 1 comporte un troisième ensemble de canaux 3c dont les sections présentent la forme générale de secteurs annulaires trapézoïdaux à angles arrondis.

Les sections des canaux 3c sont disposées suivant une rangée circulaire à la périphérie des sections des canaux 3b et dans une disposition rayonnante avec les canaux 3b.

Dans chacun des secteurs de cylindres délimités par le prolongement de deux parois radiales 4a à 120°, sont disposés quatre canaux 3c, de sorte que le support monolithe 1 comporte douze canaux 3c.

L'ensemble du monolithe 1 comporte donc vingt-sept canaux 3 dont la surface peut être recouverte par des membranes de filtration 3'.

Les canaux 3c sont séparés les uns des autres par des parois radiales 4c et délimités vers l'extérieur par une paroi tubulaire à section circulaire 5c constituant la paroi externe du support monolithe 1.

Les caractéristiques dimensionnelles du support monolithe 1, des canaux 3 et des parois 4 sont données par les paramètres dimensionnels qui seront définis ci-dessous et qui sont représentés sur la figure 1.
R = rayon externe du support monolithe,
h = dimension maximale dans la direction radiale des sections des canaux 3a,
g = dimension dans la direction radiale des sections des canaux 3b,
d = dimension dans la direction radiale des sections des canaux 3c,
e1 = épaisseur de la paroi 5c,
e2 = épaisseur de la paroi 5b,
e3 = épaisseur de la paroi 5a,
f = épaisseur des parois radiales 4a, 4b et 4c.

Généralement, les parois radiales ont toutes une même épaisseur mais les parois tubulaires coaxiales 5a, 5b et 5c peuvent présenter des épaisseurs différentes.

Le support monolithe représenté sur la figure 1 sera désigné comme support à profil KBZ ou par la simple référence KBZ.

Un tel support à profil KBZ peut présenter les caractéristiques dimensionnelles suivantes :
R = 12,50 mm ;
h = 2,69 mm ;
g = 3,94 mm ;
d = 2,16 mm ;
e1 = 1,35 mm ;
e2 = 0,92 mm ;
e3 = 0,92 mm ;
f = 0,92 mm.

On a effectué le calcul de la surface filtrante par unité de longueur d'un élément de filtration comportant le support monolithe 1 représenté sur la figure 1 et présentant les caractéristiques dimensionnelles indiquées ci-dessus.

La surface filtrante est constituée par la surface totale des parois de canaux par unité de longueur du support monolithe 1 dans la direction axiale 2.

Cette surface filtrante SF ramenée à la longueur L du monolithe est de 338,92 mm²/mm.

On a également calculé l'aire de la section d'écoulement d'un fluide dans l'élément de filtration comportant le support monolithe 1. Cette section est constituée par la somme des sections transversales des canaux.

La section d'écoulement Se est de 244,42 mm².

Le rapport SF/L.Se est alors de 1,39 mm⁻¹.

On verra par la suite, en comparant les paramètres SF, Se et SF/L.Se d'un support de type KBZ avec les paramètres correspondants de supports suivant l'art antérieur que le support de type KBZ représenté sur la figure 1 permet d'obtenir une amélioration sensible de ces paramètres.

En outre, le réseau de parois constituant le corps du monolithe qui vient d'être décrit présente une bonne résistance mécanique due en particulier à la présence de parois radiales solidaires l'une de l'autre dans une zone commune disposée suivant l'axe du support monolithe ayant un rôle de renfort.

Un inconvénient du support monolithe de type KBZ représenté sur la figure 1 est cependant que les canaux des trois ensembles présentent des formes différentes. Les conditions d'écoulement tangentiel du milieu liquide dans ces différents canaux sont donc également différentes.

Sur la figure 2, on a représenté un support monolithe poreux d'un élément de filtration, désigné de manière générale par le repère 6, qui comporte des canaux 8 dont les sections transversales sont toutes analogues et en forme de secteurs circulaires à angles arrondis. Les canaux 8 ont des formes analogues aux canaux 3a du premier ensemble de canaux du support monolithe de type KBZ représenté sur la figure 1.

Les canaux 8 sont également groupés trois par trois de manière à constituer des sections trilobées dans lesquelles chacun des canaux 8 présente une section transversale ayant la forme d'un secteur circulaire à 120°.

Le support monolithe 6 représenté sur la figure 2 présente la forme générale d'un cylindre à section circulaire ayant un axe rectiligne 7. Le support 6 est traversé suivant toute sa longueur par les canaux 8 de direction axiale, de sorte que le support monolithe présente une structure tubulaire.

Le support 6 comporte un premier ensemble de canaux comportant trois canaux 8a constituant une structure trilobée disposée symétriquement autour de l'axe 7.

Le support 6 comporte de plus, dans une disposition périphérique autour des canaux 8a, un ensemble de canaux 8b dont les sections transversales ont des formes analogues aux sections transversales des canaux 8a.

Les canaux 8b sont regroupés trois par trois de manière que leurs sections constituent des structures trilobées qui sont réparties à distance régulière sur un cercle centré sur l'axe 7. L'ensemble de canaux 8b comporte six groupes de trois canaux dont les sections constituent une structure trilobée, soit dix-huit canaux identiques.

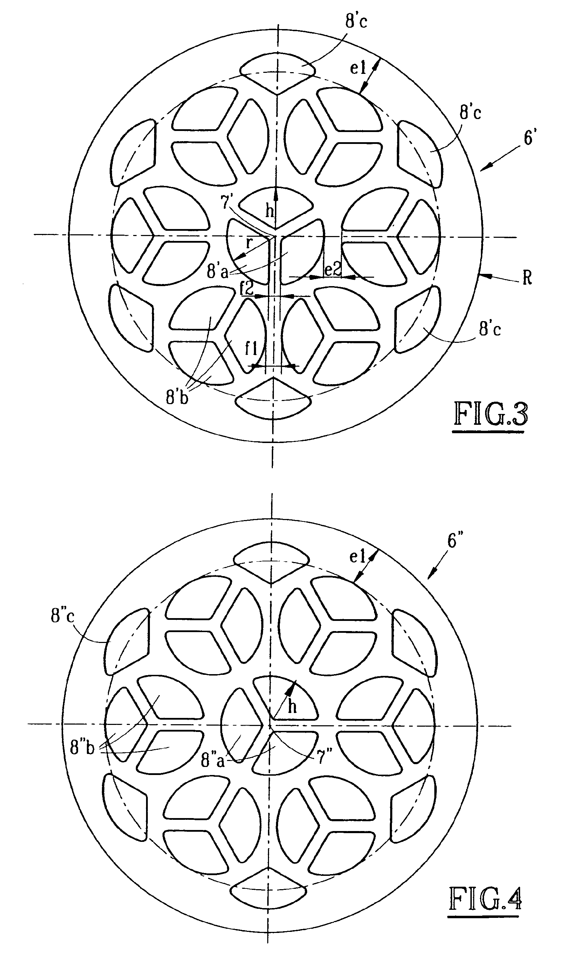

Sur la figure 3, on a représenté un support monolithe 6' comportant, à sa partie centrale, autour de son axe 7', un premier ensemble de canaux 8'a identique à l'ensemble de canaux centraux 8a du support monolithe 6 représenté sur la figure 2 ainsi qu'un second ensemble de canaux 8'b identique au second ensemble de canaux 8b du support monolithe 6.

Le support monolithe 6' comporte de plus un troisième ensemble de canaux 8'c placé à la périphérie de l'ensemble de canaux 8'b et aligné sur un cercle centré sur l'axe 7' du support 6'.

Les canaux 8'c ont une section transversale identique à la section des canaux 8'a et 8'b, ces sections étant alignées dans la direction radiale et disposées chacune de manière symétrique, par rapport à un plan de symétrie d'une paroi radiale séparant deux canaux 8'a du premier ensemble. Les canaux du second ensemble de canaux 8'b constituent des structures trilobées qui sont disposées deux à deux de manière symétrique par rapport aux plans de symétrie des parois radiales des canaux du premier ensemble.

Le troisième ensemble de canaux 8'c comporte six canaux placés à 60° l'un de l'autre autour de l'axe 7'.

Le support monolithe 6' comporte donc vingt-sept canaux dont les sections sont identiques et présentent la forme de secteurs circulaires à angles arrondis, délimités par deux segments rectilignes faisant un angle de 120°.

Sur la figure 4, on a représenté un support monolithe 6" sensiblement analogue au support 6' représenté sur la figure 3 qui comporte trois ensembles de canaux 8"a, 8"b et 8"c ayant des formes identiques aux canaux du support 6' représenté sur la figure 3. En outre, les sections des canaux des ensembles 8"b et 8"c ont des dispositions identiques à la disposition des ensembles de canaux 8'b et 8'c du support monolithe 6' représenté sur la figure 3.

La seule différente entre la disposition des canaux du support monolithe et du support monolithe 6" est relative au premier ensemble de canaux 8"a qui est tourné d'un angle de 30°, par rapport à la disposition de l'ensemble de canaux central 8'a du support monolithe 6'.

De ce fait, les sections du troisième ensemble de canaux 8"c sont placées deux à deux de manière symétrique par rapport aux plans de symétrie des parois radiales séparant les canaux 8"a et les structures trilobées du second ensemble sont symétriques par rapport aux plans de symétrie des parois du premier ensemble de canaux.

Les supports monolithes dont les sections sont représentées sur les figures 3 et 4 présentent des caractéristiques et performances très proches, dans la mesure où seule la partie centrale comportant les canaux 8'a ou 8"a diffère dans le cas des deux variantes de réalisation. Cette partie centrale comportant les canaux 8'a ou 8"a ne représente qu'environ 10 % de la surface filtrante totale de l'élément de filtration réalisé à partir du support monolithe.

Les supports monolithes dont les sections sont représentées sur les figures 3 et 4 seront désignés par la suite par la référence de profil KBT.

Les supports monolithes présentant une section transversale ayant le profil KBT sont définis par les paramètres dimensionnels qui seront indiqués ci-dessous et qui sont représentés sur les figures 3 et 4.

Ces paramètres dimensionnels sont les suivants :
R = rayon externe du support monolithe,
r = rayon de la zone occupée par trois sections de canaux constituant une structure trilobée,
e1 = distance entre le cercle centré sur l'axe du support, tangent aux structures trilobées des canaux 8'b ou 8"b et la surface externe du support,
e2 = distance radiale entre les structures trilobées du premier ensemble de canaux central 8'a ou 8"a et les structures trilobées du second ensemble de canaux 8'b ou 8"b,
f1 = épaisseur minimale de paroi entre les structures trilobées des seconds ensembles de canaux 8'b et 8"b,
f2 = épaisseur des parois radiales entre les canaux des structures trilobées,
h = dimension maximale radiale d'une section transversale d'un canal.

On a réalisé un support monolithe d'éléments de filtration ayant un profil de type KBT dont les paramètres dimensionnels sont les suivants :
R = 12,50 mm ;
r = 3,02 mm ;
e1 = 2,51 mm ;
e2 = 0,92 mm ;
f1 = 0,92 mm ;
f2 = 0,92 mm ;
h = 2,49 mm.

On a calculé la surface filtrante de l'élément de filtration qui peut être réalisé à partir du support monolithe. Cette surface SF ramenée à la longueur L de monolithe est de 280,70 mm²/mm.

On a également calculé l'aire de la section d'écoulement du support monolithe. Cette section est de 188,56 mm².

On a calculé le rapport SF/L.Se. Ce rapport est de 1,49 mm⁻¹.

Dans le tableau donné ci-dessous, on a reporté la surface filtrante et la section d'écoulement des éléments de filtration réalisés à partir des support monolithes de profils KBZ et KBT et, comparativement, la surface filtrante et la section d'écoulement de quatre éléments de filtration comparatifs réalisés à partir de support monolithes s vant l'art antérieur. On désigne par les références KBW et KBX des modules de filtration comportant des supports monolithes dont les canaux ont tous des sections circulaires.

La référence KBX correspond à un support monolithe à sept canaux à section circulaire dont un canal central et six canaux périphériques.

La référence KBW concerne un support monolithe comportant dix-neuf canaux à section circulaire dont un canal central, six canaux intermédiaires disposés de manière concentrique autour du canal central et douze canaux périphériques disposés de manière concentrique autour des canaux intermédiaires.

La référence T8c concerne le support monolithe d'un élément de filtration comportant un canal central à section circulaire et sept canaux périphériques à section triangulaire à angles arrondis.

La référence T23c concerne un support monolithe d'un élément de filtration comportant un canal central à section circulaire, six canaux intermédiaires à section trapézoïdale à angles arrondis disposés de manière concentrique autour du canal central et seize canaux trapézoïdaux périphériques disposés de manière concentrique autour des canaux intermédiaires.

Dans tous les cas les supports présentent le même rayon externe de 12,50 mm et la même longueur L.

**TABLEAU**

| PROFIL | SF/L (mm²/mm) | Se (mm²) | SF/L.Se (mm⁻¹) |
|---|---|---|---|
| KBZ | 338,92 | 244,42 | 1,39 |
| KBT | 280,70 | 188,56 | 1,49 |
| KBX | 131,95 | 197,92 | 0,67 |
| KBW | 208,92 | 182,80 | 1,14 |
| T8c | 165,42 | 250 | 0,66 |
| T23c | 289,50 | 238,89 | 1,21 |

Il apparaît sur le tableau que les éléments de filtration dont les monolithes présentent le plus faible nombre de canaux (KBX et T8c) ont la plus faible surface filtrante et le plus faible rapport SF/L.Se.

Le profil KBZ, à vingt-sept canaux suivant l'invention, permet d'obtenir la plus grande surface filtrante, bien que la section d'écoulement correspondante soit inférieure à la surface d'écoulement du profil T8c et très peu supérieure à la surface d'écoulement de la membrane T23c.

Il en résulte que le rapport SF/L.Se du profil KBZ est considérablement plus élevé que le rapport SF/L.Se du profil T8c et sensiblement supérieur au rapport SF/L.Se du profil T23c.

Il en est de même si l'on compare les caractéristiques du profil KBZ aux caractéristiques correspondantes des profils KBX et KBW à canaux à section circulaire.

Le profil KBT permet d'obtenir une surface filtrante très peu inférieure et une section d'écoulement considérablement plus faible que celle obtenue dans le cas du profil T23c. Il en résulte que le rapport SF/L.Se est sensiblement plus élevée dans le cas du profil KBT que dans le cas du profil T23c.

Les profils KBZ et KBT suivant l'invention présentent donc des caractéristiques permettant la réalisation d'éléments de filtration ayant des performances de filtration améliorées et assurant une consommation énergétique réduite.

En comparant les deux profils suivant l'invention, on s'aperçoit que le profil KBZ permet d'obtenir une surface filtrante plus importante que le profil KBT, le rapport SF/L.Se étant cependant supérieur dans le cas du profil KBT.

Le profil KBT présente donc un certain avantage, en plus du fait que ses canaux ont tous des sections identiques.

Un intérêt du profil KBZ suivant l'invention, comparé à un profil tel que le profil KBW à canaux à section circulaire, est qu'on développe la surface des canaux dirigée vers l'extérieur, ce qui augmente la performance de filtration du dispositif. Le débit de filtration augmente.

De plus, comme indiqué plus haut, le rapport R = SF/L.Se augmente, ce qui se traduit par une augmentation du rapport performance de filtration/consommation énergétique.

De même, le profil KBT, tel que représenté sur les figures 3 et 4, permet d'obtenir un développement de la surface des canaux dirigée vers l'extérieur et donc une augmentation du débit de filtration.

Par rapport à un profil selon l'art antérieur, tel que le profil KBW à canaux à section circulaire, le profil KBT permet d'obtenir une surface filtrante SF plus élevée pour une section d'écoulement Se similaire ou encore une section d'écoulement Se plus faible pour une surface filtrante SF similaire, ce qui permet d'obtenir un coût énergétique moindre lorsqu'on utilise un profil du type KBT.

Par rapport à un profil à canaux circulaires ayant un faible nombre de canaux, tel que le profil KBX, un profil KBT suivant l'invention permet d'obtenir une surface d'écoulement supérieure et également une surface filtrante beaucoup plus importante. Le débit de filtration est également plus élevé, du fait que la surface filtrante et la surface développée extérieure sont plus importantes.

En outre, si l'on compare un profil de type KBT comportant une partie centrale trilobée et des canaux périphériques à disposition trilobée à un support ne comportant qu'une structure trilobee suivant toute la section du support, le support suivant l'invention possède une surface filtrante beaucoup plus importante pour une surface d'écoulement similaire.

Le profil KBT permet d'obtenir un support monolithe ayant une compacité bien plus grande que celle d'un support comportant une simple structure trilobée. Il en résulte une meilleure résistance mécanique du support suivant l'invention.

Enfin, le profil selon l'invention tel que le profil KBT permet d'obtenir un meilleur drainage par le milieu liquide que dans le cas des supports suivant l'art antérieur. Pendant l'utilisation de l'élément de filtration, on observe moins de zones de stagnation et donc un colmatage réduit.

Le support monolithe poreux suivant l'invention présente donc de nombreux avantages pour la réalisation d'éléments de filtration pour effectuer la filtration tangentielle d'un milieu liquide.

L'invention ne se limite pas aux modes de réalisation qui ont été décrits.

C'est ainsi que le premier ensemble de canaux peut comporter un nombre de canaux supérieur à trois et constituer une structure multilobée ou, au contraire, seulement deux canaux. Dans tous les cas, les canaux du premier ensemble sont séparés les uns des autres par des parois radiales ayant une zone commune s'étendant suivant l'axe du support monolithe.

Le support monolithe peut comporter un seul ensemble périphérique de canaux ou, de préférence, plusieurs ensembles périphériques de canaux dont les sections peuvent avoir des formes identiques ou des formes différentes d'un ensemble à un autre.

Bien que l'utilisation de canaux dont la section a une forme de secteur circulaire à 120°, placés dans une disposition trilobée présente de nombreux avantages, il est possible d'utiliser des ensembles périphériques de canaux présentant des formes et des dispositions différentes. Il est également possible de concevoir des supports monolithes dont les canaux sont groupés sous la forme de structures multilobées à n canaux qui ont alors la forme de secteurs circulaires délimités par des parois faisant entre elles un angle de 2π/n radians.

Dans tous les cas, on vise une disposition rayonnante des canaux telle que les canaux présentent une surface importante dirigée vers la surface extérieure du support monolithe de l'élément de filtration.

L'invention s'applique à tout procédé de filtration à circulation tangentielle d'un milieu liquide et en particulier à la microfiltration, à la nanofiltration, à l'ultrafiltration et à l'osmose inverse, d'un milieu liquide.

## Revendications

1. Support monolithe poreux d'un élément de filtration ayant une forme tubulaire et une section transversale sensiblement constante suivant la direction de son axe (2, 7, 7', 7") et comportant une pluralité de canaux (3, 8) séparés les uns des autres par des parois (4) du support poreux (1, 6, 6', 6") dont les surfaces sont destinées à être revêtues par des membranes de filtration, ces canaux ayant des sections transversales réparties dans la section transversale du support (1, 6, 6', 6") **caractérisé par le fait qu'**il comporte un premier ensemble d'au moins deux canaux (3a, 8a, 8'a, 8"a) ayant des sections analogues, dans la partie centrale du support (1, 6, 6', 6 ") séparés l'un de l'autre par au moins une paroi (4a) de direction sensiblement radiale s'étendant suivant l'axe (2, 7, 7', 7") du support monolithe poreux et au moins un second ensemble de canaux (3b, 3c, 8b, 8'b, 8'c, 8"b, 8"c) ayant une disposition périphérique autour du premier ensemble de canaux (3a, 8a, 8'a, 8"a).

2. Support suivant la revendication 1, **caractérisé par le fait que** le premier ensemble de canaux comporte une pluralité de canaux (3a, 8a, 8'a, 8"a) dont les sections ont la forme de secteurs circulaires, séparés les uns des autres par des parois radiales ayant en commun une partie de paroi disposée suivant l'axe (2, 7, 7', 7") du support (1, 6, 6', 6"), le premier ensemble présentant une structure appelée structure multilobée.

3. Support suivant la revendication 2, **caractérisé par le fait que** le premier ensemble de canaux comporte trois canaux (3a, 8a, 8'a, 8"a) ayant sensiblement la forme de secteurs circulaires à 120° séparés les uns des autres par trois parois radiales (4a) placées à 120° l'une par rapport à l'autre ayant une zone commune suivant l'axe (2, 7, 7', 7") du support (1, 6, 6', 6"), le premier ensemble présentant une structure appelée structure trilobée.

4. Support suivant l'une quelconque des revendications 2 et 3, **caractérisé par le fait qu'**il comporte un second ensemble de canaux (3b) ayant des sections en forme de secteurs annulaires trapézoïdaux à angles arrondis répartis autour du premier ensemble de canaux (3a) et un troisième ensemble de canaux (3c) ayant des sections en forme de secteurs annulaires trapézoïdaux à angles arrondis répartis autour du second ensemble de canaux (3b).

5. Support suivant la revendication 4, **caractérisé par le fait que** le second ensemble de canaux (3b) et le troisième ensemble de canaux (3c) comportent chacun douze canaux.

6. Support suivant l'une quelconque des revendications 4 et 5, **caractérisé par le fait que** les canaux de chacun du second et du troisième ensembles de canaux (3b, 3c) sont séparés les uns des autres par des parois rectilignes radiales (4b, 4c) ayant toutes une même épaisseur.

7. Support suivant l'une quelconque des revendications 4, 5 et 6, **caractérisé par le fait que** les canaux du second et du troisième ensembles de canaux (3b, 3c) sont délimités vers l'intérieur et vers l'extérieur du support monolithe poreux (1) par des parois annulaires à section circulaire (5a, 5b, 5c).

8. Support suivant la revendication 2, **caractérisé par le fait qu'**il comporte un second ensemble de canaux (8b, 8'b, 8"b) dont la section présente la forme de secteurs circulaires à 120°, groupés trois par trois, sous la forme de structures trilobées réparties autour des sections du premier ensemble de canaux (8a, 8'a, 8"a).

9. Support suivant la revendication 8, **caractérisé par le fait que** le second ensemble de canaux (8b, 8'b, 8"b) comporte dix-huit canaux dont les sections sont groupées trois par trois sous la forme de six structures trilobées réparties autour des sections des canaux (8a) du premier ensemble.

10. Support suivant l'une quelconque des revendications 8 et 9, **caractérisé par le fait qu'**il comporte un troisième ensemble de canaux (8'c, 8"c) dont les sections présentent la forme de secteurs circulaires à 120° répartis autour du second ensemble de canaux (8'b, 8"b).

11. Support suivant la revendication 10, **caractérisé par le fait que** les sections des canaux (8'b) du second ensemble constituent des structures trilobées qui sont disposées deux à deux de manière symétrique par rapport aux plans de symétrie des parois radiales du premier ensemble de canaux (8'a) et que les sections des canaux (8'c) du troisième ensemble de canaux sont alignées, dans la direction radiale, suivant des plans de symétrie des parois radiales séparant les canaux (8'a) du premier ensemble de canaux et symétriques par rapport à ces plans de symétrie.

12. Support suivant la revendication 10, **caractérisé par le fait que** les sections des canaux (8"b) du second ensemble constituent des structures trilobées qui sont symétriques par rapport aux plans de symétrie des parois du premier ensemble de canaux et que les sections des canaux (8"c) du troisième ensemble de canaux sont disposées deux à deux de manière symétrique par rapport à des plans de symétrie des parois radiales de séparation des canaux (8"a) du premier ensemble de canaux.

13. Elément de filtration comprenant un support monolithe poreux ayant une forme tubulaire et une section transversale sensiblement constante suivant la direction de son axe (2, 7, 7', 7") et comportant une pluralité de canaux (3, 8) séparés les uns des autres par des parois (4) du support poreux (1, 6, 6', 6") dont les surfaces sont revêtues par des membranes de filtration, ces canaux ayant des sections transversales réparties dans la section transversale du support (1, 6, 6', 6"), **caractérisé par le fait que** le support monolithe poreux (1, 6, 6', 6") est réalisé suivant l'une quelconque des revendications 1 à 12.
